# EUROPEAN PATENT APPLICATION

(11) **EP 1 821 484 A2**
(43) Date of publication of application: **22.08.2007**
(21) Application number: 06021039.0
(22) Date of filing: 06.10.2006
(51) Int. Cl.: H04L 29/06, H04L 12/58

(54) **Providing different push-to-all (PTA) services using one session**

(30) Priority: 17.02.2006 KR 20060015842
(71) Applicant: Samsung Electronics Co., Ltd., Suwon-si, Gyeonggi-Do (KR)
(72) Inventor: Lee, Jin-Suk, Suwon-si, Gyeonggi-do (KR)
(74) Representative: Lang, Johannes

(57) **Abstract**

In a system and method of providing different Push-To-All (PTA) services using one session, when a PTA terminal intends to receive a Message Session Relay Protocol (MSRP) service while performing a Push-To-Talk (PTT) service or a Push-To-Video (PTV) service through a previously established PTA session, the PTA terminal requests the MSRP service using Floor Control Protocol (FCP) without establishment of a separate session, and additionally receives the MSRP service using the previously established session. This reduces a waste of resources and overhead caused by repeated session management.

## Description

### BACKGROUND OF THE INVENTION

### Field of the Invention

The present invention relates to a system and method of providing different Push-To-All (PTA) services using one session.

### Description of the Related Art

A Push-To-All (PTA) service is an Internet Protocol (IP) Multimedia Subsystem (IPMS)-based service, and includes a Push-To-Talk (PTT) service, a Push-To-Video (PTV) service, a Message Session Relay Protocol (MSRP) service, and so on. The PTT service is for transmitting voice data, the PTV service is for transmitting image data, and the MSRP service is for transmitting text messages or binary data.

A PTA terminal makes use of a PTA session for a PTA service. The PTA terminal intending to get the PTA service first establishes the PTA session with a correspondent PTA terminal using an INVITE message of a Session Initiation Protocol (SIP) "INVITE" request method. Then, the PTA terminal can request or release the floor (right to speak) in the established PTA session using Floor Control Protocol (FCP). During the PTA session, data can be transmitted and received according to a method by which the PTA terminal is granted the floor, and then transmits the data, or receives data transmitted by another PTA terminal to which the floor has been given. The transmitted and received data can include all of the voice data, the image data, the text messages, binary data, and so on. In the PTA service, at least three PTA terminals can participate in one session to support a group service. PTA terminals participating in the same session can hear the same conversation or receive the same data.

Currently, PTT or PTV has applications different from MSRP. Hence, in order to provide concurrent services based on PTT and MSRP, or PTV and MSRP, two different sessions must be opened. The same goes for PTA, which is currently under development.

In other words, while performing the PTT or PTV service through an existing established session, a PTA terminal may wish to transmit text messages or binary data to other PTA terminals that are participating in the established session. In this case, the PTA terminal must establish a new session for the MSRP service with the other PTA terminals using an INVITE message. Furthermore, even when a session for the PTA service has already been established between PTA terminals, in order to additionally perform a new PTA service of a different type from an ongoing PTA service, a new session for the new PTA service must be established again.

In the case of requesting the establishment of the new session for the new PTA service, there are various drawbacks such as an increase of time taken to provide the PTA service due to the time needed to request the establishment of the new session, a waste of resources due to the establishment of multiple sessions, the generation of additional overhead due to the management of multiple sessions, etc.

### SUMMARY OF THE INVENTION

An object of the present invention is to provide a system and method of simultaneously providing different Push-To-All (PTA) services using one session.

Another object of the present invention is to provide a system and method of simultaneously providing different Push-To-All (PTA) services using one session, in which, while one PTA service is being performed using a previously established session, another PTA service is additionally performed through the previously established session.

Yet another object of the present invention is to provide a system and method of simultaneously providing different Push-To-All (PTA) services using one session, in which, while performing a Push-To-Talk (PTT) service or a Push-To-Video (PTV) service through a previously established PTA session, a Message Session Relay Protocol (MSRP) service is additionally performed through the previously established session.

According to one aspect of the present invention, a method of providing different Push-To-All (PTA) services using one session is provided, the method including: a first PTA terminal requesting a second PTA service using Floor Control Protocol (FCP) while participating in a first previously established PTA session and receiving a first PTA service; a PTA server providing information for setting up a connection for the second PTA service to the first PTA terminal and to PTA terminals that are targets for the second PTA service; and the PTA terminals setting up the connection for the second PTA service using the information received from the PTA server.

The PTA terminals that are targets for the second PTA service all preferably include PTA terminals participating in the same session as the first PTA terminal requesting the second PTA service.

The first PTA terminal requesting the second PTA service preferably includes transmitting a Talk Burst Control Protocol (TBCP)_REQUEST message containing information on a type of second PTA service to the PTA server.

The PTA terminals that are targets for the second PTA service preferably include at least one PTA terminal selected by the first PTA terminal requesting the second PTA service from among the PTA terminals participating in the same session as the first PTA terminal requesting the second PTA service.

The first PTA terminal requesting the second PTA service preferably includes transmitting the TBCP_REQUEST message containing the information on the type of second PTA service and identification information of the PTA terminals that are targets for the second PTA service to the PTA server.

The information for setting up the connection preferably includes currently available information of a relay server.

The information of the relay server preferably includes address information and port information of the relay server.

The PTA terminals setting up the connection for the second PTA service preferably includes providing access to the relay server using the information of the relay server received from the PTA server and setting up the connection with each other.

The PTA server providing the information for setting up the connection for the second PTA service to the PTA terminals preferably includes: transmitting a Talk Burst Control Protocol (TBCP)_GRANT message containing the information for setting up the connection to the first PTA terminal requesting the second PTA service; and transmitting a TBCP_TAKEN message containing the information for setting up the connection to the PTA terminals that are targets for the second PTA service.

The method preferably further includes one of the PTA terminals setting up the connection requesting termination of the second PTA service.

Requesting termination of the second PTA service preferably includes the PTA terminal requesting termination of the second PTA service transmitting a TBCP_RELEASE message containing information on a type of second PTA service.

The first PTA service preferably includes at least one of a Push-To-Talk (PTT) service and a Push-To-Video (PTV) service, and the second PTA service preferably includes a Message Session Relay Protocol (MSRP) service.

According to another aspect of the present invention, a system providing different Push-To-All (PTA) services using one session is provided, the system including: a first PTA terminal adapted to request a second PTA service using Floor Control Protocol (FCP) while participating in a first previously established PTA session and to receive a first PTA service; and a PTA server adapted to provide information requested to set up a connection for the second PTA service to the first PTA terminal and to PTA terminals that are targets for the second PTA service, in response to receiving the request for provision of the second PTA service using the FCP from the first PTA terminal.

The first PTA terminal is adapted to preferably request provision of the second PTA service using a Talk Burst Control Protocol (TBCP)_REQUEST message. The TBCP_REQUEST message preferably includes information on a type of second PTA service. The TBCP_REQUEST message preferably further includes identification information of the PTA terminals that are targets for the second PTA service.

The PTA server is adapted to preferably provide the information requested to set up the connection using a Talk Burst Control Protocol (TBCP) GRANT message to the first PTA terminal requesting the second PTA service, and to preferably provide the information requested to set up the connection using a TBCP_TAKEN message to the PTA terminals that are targets for the second PTA service. The information which the PTA server provides to the PTA terminals in order to set up the connection preferably includes currently available information on an address and a port of a relay server.

The first PTA service preferably includes at least one of a Push-To-Talk (PTT) service and a Push-To-Video (PTV) service, and the second PTA service preferably includes a Message Session Relay Protocol (MSRP) service.

The connection for the MSRP service preferably includes a Transmission Control Protocol (TCP) connection.

As described above, the system and method of simultaneously providing different Push-To-All (PTA) services using one session in accordance with the present invention are characterized in that, when the PTA terminal performing a Push-To-Talk (PTT) service or a Push-To-Video (PTV) service through a previously established PTA session requests a different PTA service, the PTA terminals request the different PTA service using Floor Control Protocol (FCP), and the PTA server receiving the request sets up the connection for the requested PTA service using the previously established session without establishment of a separate session.

### BRIEF DESCRIPTION OF THE DRAWINGS .

A more complete appreciation of the present invention, and many of the attendant advantages thereof, will be readily apparent as the present invention becomes better understood by reference to the following detailed description when considered in conjunction with the accompanying drawings, in which like reference symbols indicate the same or similar components, wherein:
FIG. 1 is a view of the configuration of a Push-To-All (PTA) system;
FIG. 2 is a view of a flow of signals between PTA terminals and a PTA server according to an exemplary embodiment of the present invention;
FIG. 3 is a view of the format of a Real-time Transport Protocol (RTP) Control Protocol (RTCP) Application packet (RTCP:APP);
FIG. 4 is a view of the format of a Talk Burst Control Protocol (TBCP)_REQUEST message according to an exemplary embodiment of the present invention;
FIG. 5 is a view of the format of a TBCP_GRANT message according to an exemplary embodiment of the present invention;
FIG. 6 is a view of the format of a TBCP_TAKEN message according to an exemplary embodiment of the present invention; and
FIG. 7 is a view of the format of a TBCP_RELEASE message according to an exemplary embodiment of the present invention.

### DETAILED DESCRIPTION OF THE INVENTION

Hereinafter, the present invention is described below in more detail below with reference to the accompanying drawings, in which exemplary embodiments of the present invention are shown. In the drawings, like reference numbers and symbols refer to like elements throughout the specification. To enable a clear understanding of the present invention, related technology that is well known to those of ordinary skill in the art to which the present invention pertains have not been described in detail.

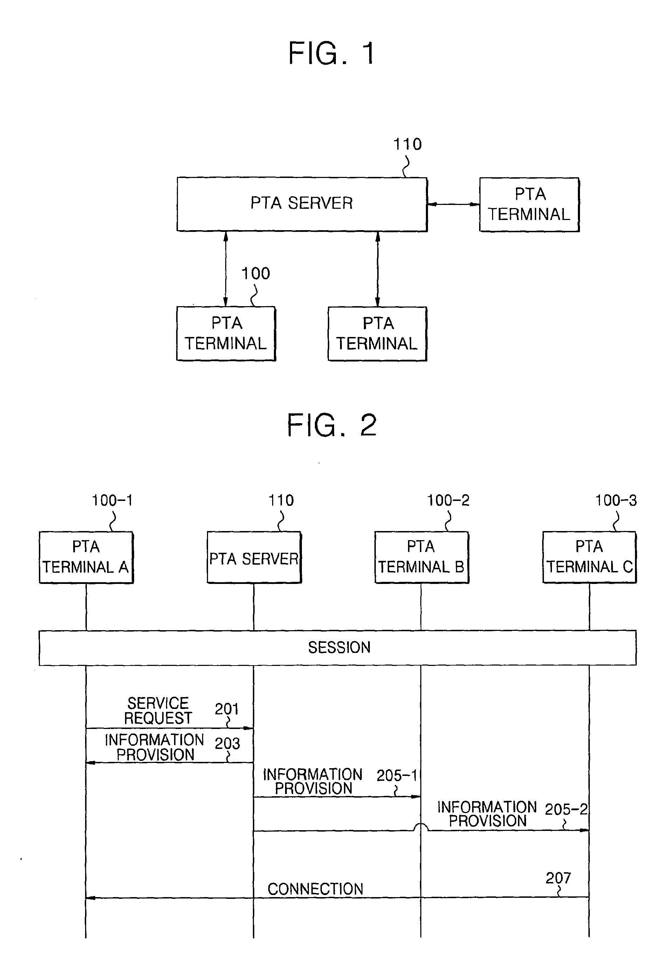

FIG. 1 is a view of the configuration of a Push-To-All (PTA) system, in which a plurality of PTA terminals are connected to a PTA server.

As illustrated in FIG. 1, the PTA system includes at least one PTA terminal 100 and a PTA server 110.

The PTA terminal 100 is equipment used by a PTA service user to receive a PTA service, and has a PTA client, which is a PTA service requester, contained therein. All requests of the PTA service user are transmitted to the PTA system including the PTA server 110 through the PTA terminal 100, and responses are transmitted to the PTA service user through the PTA terminal 100. Hence, the PTA service user will not be separately described below. As long as no precise distinction is required, the term "PTA terminal 100" is used to refer both to the terminal itself and the PTA service user.

The PTA terminal 100 makes it possible to access a PTA service. The PTA terminal 100 serves mainly to create a new PTA session, participate in an existing PTA session that has already been created, and terminate a created PTA session. In addition, the PTA terminal 100 can serve to create and deliver a talk burst, perform authentication when providing access to the PTA service, and so on.

The PTA server 110 can maintain and manage the PTA session. For example, the PTA server 110 can manage the floor in each session. When the floor is requested by any PTA terminal 100, the PTA server 110 determines whether or not to assign the floor to the corresponding PTA terminal 100. According to the result of the determination, the PTA server 110 can assign the floor to the corresponding PTA terminal 100, or deny the request for the floor of the corresponding PTA terminal 100. Furthermore, the PTA server 110 can control data transmission between the PTA terminals 100 participating in the session. In other words, the PTA server 110 can transmit the talk burst received from the PTA terminal 100 having the floor to the other PTA terminals 100 participating in the session.

As illustrated in FIG. 1, the PTA system can have a server-client structure formed by the PTA terminal 100 and the PTA server 110.

In the PTA system, signaling can be carried out through Session Initiation Protocol (SIP), a signaling protocol. For example, a PTA session can be set up by using a SIP INVITE method. SIP is a text-based application level protocol which operates on a server-client model. Due to its simple structure and excellent expandability compared to existing protocols, SIP is used in various fields such as Internet telephony, video telephony, multimedia, on-line game connection, and so on.

In the PTA system, data can be transmitted by a Talk Burst Control Protocol (TBCP) message. The TBCP message can be used to transmit various data including media data such as image, voice and so on. The TBCP message can be implemented on the basis of a Real-time Transport Protocol (RTP) Control Protocol (RTCP) Application packet (RTCP:APP), which is defined in RFC 3550.

In particular, a TBCP_REQUEST message used by the PTA terminal 100 to request the floor can be used to transmit additional information of the PTA terminal 100 to the PTA server 110.

An example in which an arbitrary PTA terminal 100 intends to additionally perform a Message Session Relay Protocol (MSRP) service while performing a PTT service is described below.

When the TBCP_REQUEST message is received from the PTA terminal 100 performing a PTT service through a previously established session, the PTA server 110 determines whether or not the TBCP_REQUEST message is requesting provision of a MSRP service.

If the TBCP_REQUEST message is requesting provision of the MSRP service, the PTA server 110 provides information required to perform the MSRP service to both the PTA terminal 100 requesting the MSRP service and other PTA terminals 100 that are targets for the requested MSRP service. The PTA server 110 determines whether or not the requested MSRP service can be currently provided. If the requested MSRP service cannot be currently provided, the PTA server 110 transmits a message denying providing the MSRP service to the PTA terminal 100 requesting the MSRP service.

The PTA terminals 100 that are targets for the service in principle include the PTA terminal 100 requesting the service. However, for convenience, PTA terminals 100 that are targets for the service in principle, excluding the PTA terminal 100 requesting the service, are called "service target PTA terminals 100."

The service target PTA terminals 100 can include all of the PTA terminals 100 participating in the same session as the PTA terminal 100 requesting the service, or only at least one PTA terminal 100 selected from the PTA terminals 100 participating in the same session by the PTA terminal 100 requesting the service.

The information required to perform the MSRP service which the PTA server 110 provides to the PTA terminals 100 is used to set up a connection for the MSRP service, and contains currently available information of a relay server (not shown). The information of the relay server can contain information on an address, port, etc. of the relay server.

The PTA terminals 100 provide access to the relay server using the information of the relay server received from the PTA server 110, and set up the connection for the MSRP service. The connection for the MSRP service can be a Transmission Control Protocol (TCP) connection. When the connection is set up, the PTA terminals 100 can perform the MSRP service through the connection, thereby transmitting text messages or binary data to each other. The text messages or binary data can be transmitted by the MSRP service using the session established for the PTT service.

As described above, the TBCP message is used to control the floor, so that the MSRP service can be performed through the previously established PTT session without a separate session being established.

FIG. 2 is a view of a flow of signals between PTA terminals and a PTA server according to an exemplary embodiment of the present invention.

While establishing a session with a PTA terminal B 100-2 and a PTA terminal C 100-3 and performing a PTT service, a PTA terminal A 100-1 can transmit a TBCP_REQUEST message requesting an MRSP service to a PTA server 110 (S201).

Then, the PTA server 110 transmits a TBCP_TAKEN message, which contains information required to perform the MSRP service requested by the PTA terminal A 100-1, and currently available information of a relay server, namely, information on an address and port of the relay server, to the PTA terminal A 100-1 (S203). The PTA server 110 also transmits the TBCP_TAKEN message containing the information of the relay server to the PTA terminal B 100-2 and the PTA terminal C 100-3, which are the target PTA terminals for the MSRP service (S205-1 and S205-2).

The PTA terminal A 100-1, the PTA terminal B 100-2, and the PTA terminal C 100-3 set up a connection using the information received from the PTA server 110 (S207). Thereafter, the MSRP service can be performed through the connection.

The example of FIG. 2 in which only three PTA terminals are illustrated is merely provided to aid in understanding the present invention. The present invention is not limited to this example.

The TBCP message that can be used for the present invention is described below with reference to the accompanying drawings. A format of each TBCP message suggested below is based on the RTCP:APP, which is defined in RFC 3550. First, the RTCP:APP is described.

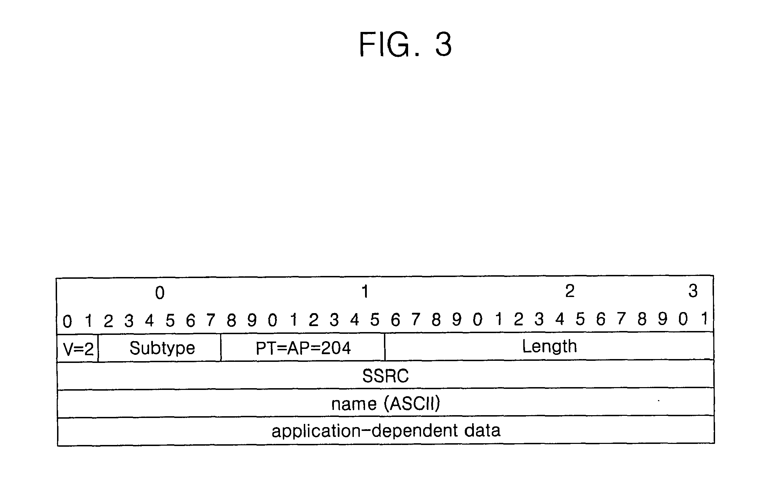

FIG. 3 is a view of the format of an RTCP:APP.

As illustrated in FIG. 3, the RTCP:APP can contain a 2-bit Version field, a 1-bit Padding field, a 5-bit Subtype field, a 1-byte Payload Type (PT) field, a 2-byte Length field, a 4-byte SSRC (Synchronization SouRCe) field, a Name field, and an Application-Dependent Data field.

The Version field includes information on an RTP version of the TBCP message. The TBCP message of FIG. 3 is a message of RTP version 2. The Padding field includes, in the TBCP message, information on whether or not a padding octet that does not belong to a payload is to be added. The Subtype field contains information on what role of TBCP the TBCP message plays. The Payload Type field contains information on the purpose for which the TBCP message is used. For example, "204" denoted in FIG. 3 indicates a message indicating that the TBCP message is used for control. The Length field contains information on a length of the TBCP message.

Furthermore, the Application-Dependent Data field is varied depending on what type of application the RTCP:APP is used for, and is included in the RTCP:APP.

TBCP messages that can be used in the present invention are described below.

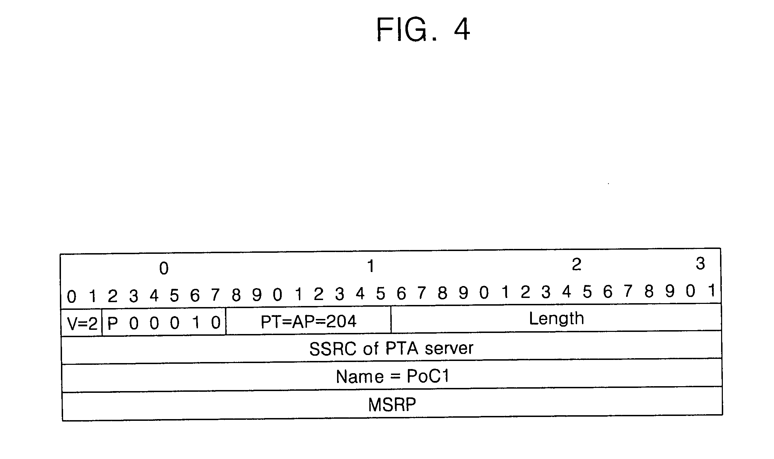

FIG. 4 is a view of the format of a TBCP_REQUEST message according to an exemplary embodiment of the present invention.

The TBCP_REQUEST message of FIG. 4 contains an item "MSRP" in the Application-Dependent Data field. In other words, the TBCP_REQUEST message of FIG. 4 is transmitted by the PTA terminal 100 to the PTA server 110 in order to request an MSRP service. The TBCP_REQUEST message of FIG. 4 can be used when all of the PTA terminals 100 participating in the same session as the PTA terminal 100 transmitting the TBCP_REQUEST message become targets for the MSRP service. When only some of the PTA terminals 100 are to be selected as the MSRP service targets participating in the same session, the PTA terminal 100 requesting provision of the MSRP service includes identification information of the PTA terminal 100 to be selected in the TBCP_REQUEST message, and transmits it to the PTA server 110.

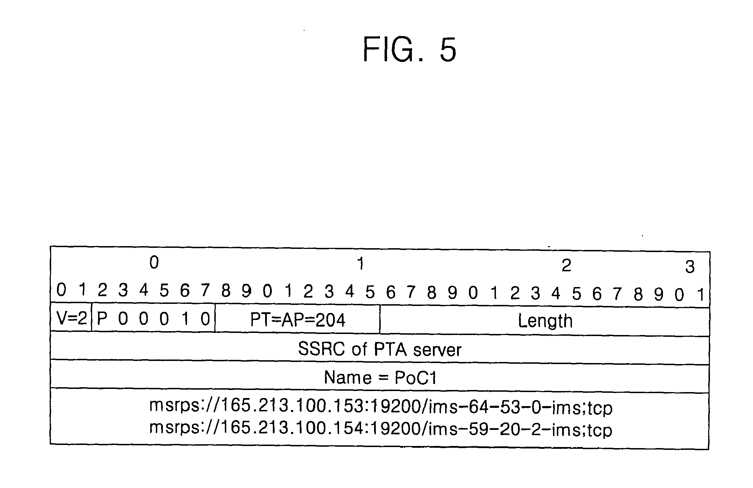

FIG. 5 is a view of the format of a TBCP_GRANT message according to an exemplary embodiment of the present invention.

The TBCP_GRANT message of FIG. 5 is transmitted from the PTA server 110 to the PTA terminal 100 which transmits the TBCP_REQUEST message of FIG. 4, and can include information required to provide the MSRP service requested by the PTA terminal 100. The information required to provide the MSRP service can contain information used to set up the connection for the MSRP service, i.e. currently available information of the relay server. The information of the relay server can contain information on an address, port, etc. of the relay server.

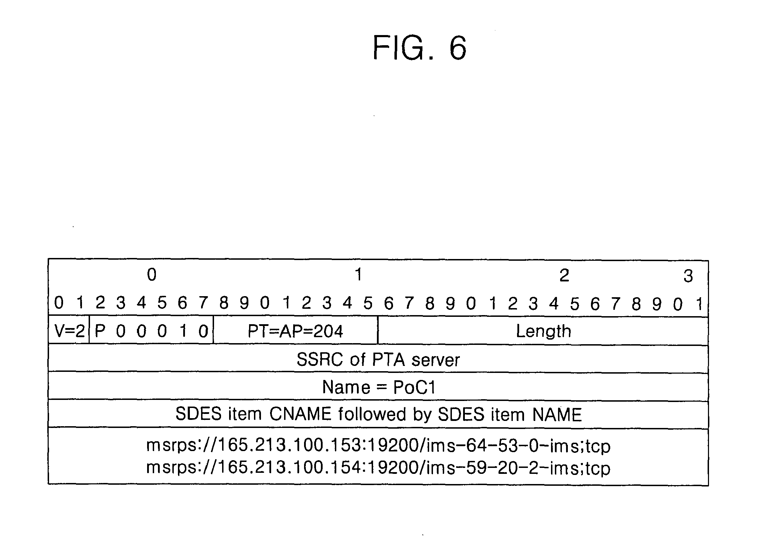

FIG. 6 is a view of the format of a TBCP_TAKEN message according to an exemplary embodiment of the present invention.

The TBCP_TAKEN message of FIG. 6 is a message transmitted to the target PTA terminals 100 for the MSRP service, which is requested through the TBCP_REQUEST message of FIG. 4, from the PTA server 110, and can include information required to provide the MSRP service requested through the TBCP_REQUEST message.

The TBCP_GRANT message of FIG. 5 and the TBCP_TAKEN message of FIG. 6 each contain the information for the MSRP service, an example of which is as follows:
"msrps://165.213.100.153:19200/ims-64-53-0-ims;tcp," and
"msrps://165.213.100.154:19200/ims-59-20-2-ims;tcp."

In general, the TBCP_GRANT message and the TBCP_TAKEN message contain the same information for the MSRP service.

The PTA terminal 100 receiving the TBCP_GRANT message, and the target PTA terminals 100 receiving the TBCP_TAKEN message can set up the connection for the MSRP service using information obtained through each corresponding message.

In other words, the connection for the PTA service can be set up using Floor Control Protocol (FCP) rather than an INVITE message. The set connection can be also terminated using FCP.

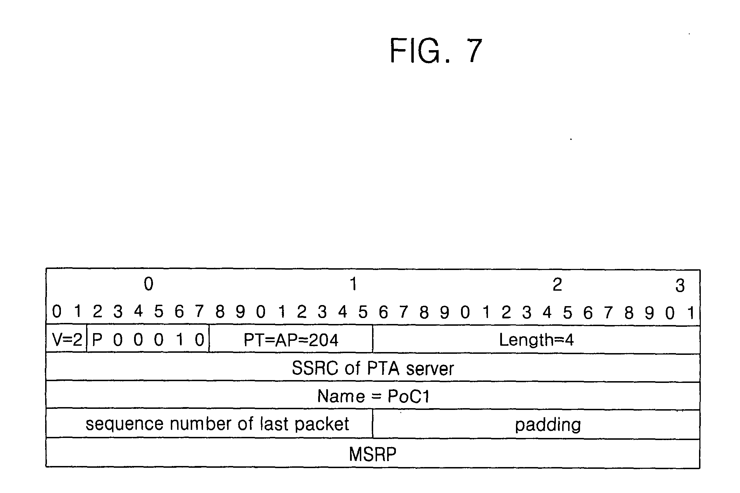

FIG. 7 is a view of the format of a TBCP_RELEASE message according to an exemplary embodiment of the present invention.

The TBCP_RELEASE message of FIG. 7 can be used to terminate the connection set up by the TBCP messages of FIGS. 4, 5, and 6. The TBCP_RELEASE message can also contain an item "MSRP" indicating the type of service in the Application-Dependent Data field.

As described above, while the PTA service is performed through the previously established session, an additional PTA service can be started or ended using the FCP message, i.e. the TBCP_REQUEST message, the TBCP_GRANT message, the TBCP_TAKEN message, or the TBCP_RELEASE message.

The foregoing processes according to the present invention are summarized below.

First, the PTA terminal 100, which intends to transmit the text messages or the binary data while performing the PTT service through the previously established session, transmits the TBCP_REQUEST message to the PTA server 110, the message containing information indicating that the floor request using the corresponding message is the floor request for the MSRP service rather than the floor request for the PTT service.

The PTA server 110, which receives the TBCP_REQUEST message containing the information on the floor request for the MSRP service, recognizes that the TBCP_REQUEST message is not simply used for the floor request for the PTT or PTV service but rather for the floor request for the MSRP service, and thus transmits the currently available information, i.e. the TCP address information and the TCP port information, of the relay server to the PTA terminal 100 receiving the corresponding message and the service target PTA terminals 100. The PTA server 110 transmits the TBCP_GRANT message to the PTA terminal 100 transmitting the corresponding message, and transmits the TBCP_TAKEN message to the other PTA terminals 100.

The target PTA terminals 100 which receive the currently available information, i.e., the TCP address information and the TCP port information, of the relay server from the PTA server 110, set up the connection for the MSRP service using the currently available information of the relay server, and perform the MSRP service through the established session.

When the MSRP service is to be terminated, the PTA terminal 100 transmits the TBCP_RELEASE message requesting termination of the MSRP service to the PTA server 110. The MSRP service is then terminated, and thereafter, only the existing PTT or PTV service is maintained.

As can be seen from the foregoing, the method and system for simultaneously providing different PTA services using one session in accordance with the present invention additionally perform the PTA service without establishment of the session using the FCP. As a result, it is possible to save time taken to perform the additional service, and to reduce overhead and wasted resources caused by repeated session management.

While the present invention has been described with reference to exemplary embodiments thereof, it will be understood by those skilled in the art that various modifications in form and detail can be made therein without departing from the scope of the present invention as defined by the following claims.

## Claims

1. A method of providing different Push-To-All (PTA) services using one session, the method comprising:
a first PTA terminal requesting a second PTA service using Floor Control Protocol (FCP) while participating in a first previously established PTA session and receiving a first PTA service;
a PTA server providing information for setting up a connection for the second PTA service to the first PTA terminal and to PTA terminals that are targets for the second PTA service; and
the PTA terminals setting up the connection for the second PTA service using the information received from the PTA server.

2. The method according to claim 1, wherein the PTA terminals that are targets for the second PTA service all comprise PTA terminals participating in the same session as the first PTA terminal requesting the second PTA service.

3. The method according to claim 2, wherein the first PTA terminal requesting the second PTA service comprises transmitting a Talk Burst Control Protocol (TBCP)_REQUEST message containing information on a type of second PTA service to the PTA server.

4. The method according to claim 1, wherein the PTA terminals that are targets for the second PTA service comprise at least one PTA terminal selected by the first PTA terminal requesting the second PTA service from among the PTA terminals participating in the same session as the first PTA terminal requesting the second PTA service.

5. The method according to claim 4, wherein the first PTA terminal requesting the second PTA service comprises transmitting the TBCP_REQUEST message containing the information on the type of second PTA service and identification information of the PTA terminals that are targets for the second PTA service to the PTA server.

6. The method according to claim 1, wherein the information for setting up the connection comprises currently available information of a relay server.

7. The method according to claim 6, wherein the information of the relay server comprises address information and port information of the relay server.

8. The method according to claim 6, wherein the PTA terminals setting up the connection for the second PTA service comprises providing access to the relay server using the information of the relay server received from the PTA server and setting up the connection with each other.

9. The method according to claim 1, wherein the PTA server providing the information for setting up the connection for the second PTA service to the PTA terminals comprises:
transmitting a Talk Burst Control Protocol (TBCP)_GRANT message containing the information for setting up the connection to the first PTA terminal requesting the second PTA service; and
transmitting a TBCP_TAKEN message containing the information for setting up the connection to the PTA terminals that are targets for the second PTA service.

10. The method according to claim 1, further comprising one of the PTA terminals setting up the connection requesting termination of the second PTA service.

11. The method according to claim 10, wherein requesting termination of the second PTA service comprises the PTA terminal requesting termination of the second PTA service transmitting a TBCP_RELEASE message containing information on a type of second PTA service.

12. The method according to claim 1, wherein the first PTA service comprises at least one of a Push-To-Talk (PTT) service and a Push-To-Video (PTV) service, and wherein the second PTA service comprises a Message Session Relay Protocol (MSRP) service.

13. A system providing different Push-To-All (PTA) services using one session, the system comprising:
a first PTA terminal adapted to request a second PTA service using Floor Control Protocol (FCP) while participating in a first previously established PTA session and to receive a first PTA service; and
a PTA server adapted to provide information requested to set up a connection for the second PTA service to the first PTA terminal and to PTA terminals that are targets for the second PTA service, in response to receiving the request for provision of the second PTA service using the FCP from the first PTA terminal.

14. The system according to claim 13, wherein the first PTA terminal is adapted to request provision of the second PTA service using a Talk Burst Control Protocol (TBCP)_REQUEST message.

15. The system according to claim 14, wherein the TBCP_REQUEST message comprises information on a type of second PTA service.

16. The system according to claim 15, wherein the TBCP_REQUEST message further comprises identification information of the PTA terminals that are targets for the second PTA service.

17. The system according to claim 13, wherein the PTA server is adapted to provide the information requested to set up the connection using a Talk Burst Control Protocol (TBCP) GRANT message to the first PTA terminal requesting the second PTA service, and to provide the information requested to set up the connection using a TBCP_TAKEN message to the PTA terminals that are targets for the second PTA service.

18. The system according to claim 17, wherein the information which the PTA server provides to the PTA terminals in order to set up the connection comprises currently available information on an address and a port of a relay server.

19. The system according to claim 13, wherein the first PTA service comprises at least one of a Push-To-Talk (PTT) service and a Push-To-Video (PTV) service, and wherein the second PTA service comprises a Message Session Relay Protocol (MSRP) service.

20. The system according to claim 19, wherein the connection for the MSRP service comprises a Transmission Control Protocol (TCP) connection.
